# EUROPÄISCHE PATENTSCHRIFT

(11) **EP 1 230 471 B1**
(45) Veröffentlichungstag und Bekanntmachung des Hinweises auf die Patenterteilung: **17.03.2004**
(21) Anmeldenummer: 00987166.6
(22) Anmeldetag: 18.11.2000
(51) Int. Cl.: F01N 11/00

(54) **VERFAHREN ZUM BETREIBEN EINES SPEICHERKATALYSATORS EINER BRENNKRAFTMASCHINE**
METHOD FOR OPERATING AN ACCUMULATOR-TYPE CATALYTIC CONVERTER OF AN INTERNAL COMBUSTION ENGINE
PROCEDE DE FONCTIONNEMENT D'UN POT CATALYTIQUE A ACCUMULATION D'UN MOTEUR A COMBUSTION INTERNE

(30) Priorität: 31.12.1999 DE 19963921
(43) Veröffentlichungstag der Anmeldung: 14.08.2002
(73) Patentinhaber: ROBERT BOSCH GMBH, 70442 Stuttgart (DE)
(72) Erfinder: SCHNAIBEL, Eberhard, 71282 Hemmingen (DE); SCHLESIGER, Oliver, 71679 Asperg (DE); KORING, Andreas, 71636 Ludwigsburg (DE); BELLMANN, Holger, 71636 Ludwigsburg (DE); BLUMENSTOCK, Andreas, 71638 Ludwigsburg (DE); WINKLER, Klaus, 71277 Rutesheim (DE)
(86) Internationale Anmeldenummer: PCT/DE2000/004080
(87) Internationale Veröffentlichungsnummer: WO 2001/049988

(56) Entgegenhaltungen:
- EP-A- 0 858 837
- EP-A- 0 860 595
- US-A- 5 724 808

## Beschreibung

### Stand der Technik

Die Erfindung betrifft ein Verfahren zum Betreiben eines Speicherkatalysators einer Brennkraftmaschine insbesondere eines Kraftfahrzeugs, bei dem der Speicherkatalysator mit Stickoxiden be- und entladen wird, und bei dem die Speicherfähigkeit des Speicherkatalysators aufgrund von in dem verwendeten Kraftstoff enthaltenem Schwefel vermindert wird. Ebenfalls betrifft die Erfindung ein Steuergerät für eine Brennkraftmaschine insbesondere eines Kraftfahrzeugs sowie eine Brennkraftmaschine insbesondere für ein Kraftfahrzeug.

Ein derartiges Verfahren, ein derartiges Steuergerät und eine derartige Brennkraftmaschine sind beispielsweise bei einer sogenannten Benzin-Direkteinspritzung bekannt. Dort wird der Kraftstoff in einem Homogenbetrieb während der Ansaugphase oder in einem Schichtbetrieb während der Verdichtungsphase in den Brennraum der Brennkraftmaschine eingespritzt. Der Homogenbetrieb ist vorzugsweise für den Vollastbetrieb der Brennkraftmaschine vorgesehen, während der Schichtbetrieb für den Leerlauf- und Teillastbetrieb geeignet ist. Beispielsweise in Abhängigkeit von dem angeforderten Drehmoment wird bei einer derartigen direkteinspritzenden Brennkraftmaschine zwischen den genannten Betriebsarten umgeschaltet.

Insbesondere zur Ausführung des Schichtbetriebs ist es erforderlich, dass ein Speicherkatalysator vorhanden ist, mit dem entstehende Stickoxide zwischengespeichert werden können, um sie während eines nachfolgenden Homogenbetriebs in einem Dreiwegekatalysator zu reduzieren. Dieser Speicherkatalysator wird im Schichtbetrieb mit den Stickoxiden beladen und im Homogenbetrieb wieder entladen. Dieses Be- und Entladen führt zu einer schwefelbedingten Alterung des Speicherkatalysators und damit zu einer Verminderung der Speicherfähigkeit desselben. Die schwefelbedingte Alterung basiert dabei auf der Schwefelhaltigkeit des Kraftstoffs, mit dem die Brennkraftmaschine betrieben wird.

Weiterer Stand der Technik ist aus der US 5,724,808 oder der EP 860 595 A oder der EP 858 837 A bekannt.

### Aufgabe und Vorteile der Erfindung

Aufgabe der Erfindung ist es, ein Verfahren zum Betreiben eines Speicherkatalysators einer Brennkraftmaschine zu schaffen, mit dem die schwefelbedingte Alterung des Speicherkatalysators besser berücksichtigt werden kann.

Diese Aufgabe wird bei einem Verfahren der eingangs genannten Art erfindungsgemäß dadurch gelöst, dass mehrere Alterungszustände des Speicherkatalysators ermittelt werden, und dass aus aufeinanderfolgenden Alterungszuständen ein Schwefelgehalt des verwendeten Kraftstoffs ermittelt wird. Bei einem Steuergerät und einer Brennkraftmaschine der jeweils eingangs genannten Art wird die Aufgabe entsprechend gelöst.

Durch die Erfindung wird die Möglichkeit geschaffen, den Schwefelgehalt des verwendeten Kraftstoffs ohne die Verwendung eines speziellen Sensors zu ermitteln. Dies stellt eine wesentliche Kostenersparnis dar. Der ermittelte Schwefelgehalt kann dann von dem Steuergerät bei der Steuerung und/oder Regelung der Brennkraftmaschine weiterverwendet werden. Daraus resultiert eine Verbesserung des Betriebs der Brennkraftmaschine insgesamt.

Bei einer vorteilhaften Weiterbildung der Erfindung wird eine Steigung der aufeinanderfolgenden Alterungszustände ermittelt, und es wird der Schwefelgehalt in Abhängigkeit von dieser Steigung ermittelt. Dies stellt eine besonders einfache und damit schnelle Art und Weise dar, wie die Erfindung ausgeführt werden kann.

Bei einer alternativen vorteilhaften Weiterbildung der Erfindung wird ein Kraftstoffverbrauch zwischen zwei aufeinander folgenden Regenerierungen ermittelt, es wird eine bei einer Regenerierung ausgetragene Schwefelmenge ermittelt, und es wird daraus der Schwefelgehalt des Kraftstoffs ermittelt. Dieser Schwefelgehalt wird mit einer zugehörigen Steigung der aufeinander folgenden Alterungszustände in Beziehung gesetzt. Aus dieser Beziehung wird dann bei anderen Steigungen auf entsprechend zugehörige andere Schwefelgehalte geschlossen.

Bei einer vorteilhaften Ausgestaltung der Erfindung wird der Zeitpunkt einer Schwefelregenerierung in Abhängigkeit von dem Schwefelgehalt bestimmt. Damit kann eine sehr genaue Steuerung und/oder Regelung der Brennkraftmaschine insbesondere im Hinblick auf möglichst geringe Abgasemissionen erreicht werden.

Bei einer weiteren vorteilhaften Ausgestaltung der Erfindung wird die Intensität einer Regenerierung in Abhängigkeit von dem Schwefelgehalt bestimmt. Auch hierdurch wird eine Verbesserung der Steuerung und/oder Regelung der Brennkraftmaschine insbesondere im Hinblick auf die Abgasemissionen und den Kraftstoffverbrauch erreicht.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. Als Steuerelement kann insbesondere ein elektrisches Speichermedium zur Anwendung kommen, beispielsweise ein Read-Only-Memory oder ein Flash-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

### Ausführungsbeispiele der Erfindung

- Figur 1: zeigt eine schematische Darstellung eines Ausführungsbeispiels einer erfindungsgemäßen Brennkraftmaschine, und
- Figur 2: zeigt ein schematisches Schaubild der Alterung des Speicherkatalysators der Brennkraftmaschine der Figur 1.

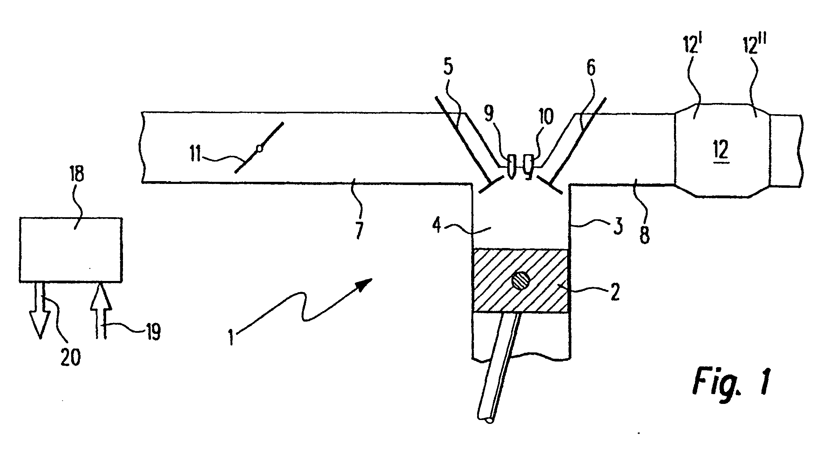

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlaßventil 5 und ein Auslaßventil 6 begrenzt ist. Mit dem Einlaßventil 5 ist ein Ansaugrohr 7 und mit dem Auslaßventil 6 ist ein Abgasrohr 8 gekoppelt.

Im Bereich des Einlaßventils 5 und des Auslaßventils 5 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Bei dem Katalysator 12 handelt es sich um einen Speicherkatalysator 12', der mit einem Dreiwegekatalysator 12'' kombiniert ist. Der Katalysator 12 ist damit unter anderem dazu vorgesehen, Stickoxide (NOx) zwischenzuspeichern.

Ein Steuergerät 18 ist von Eingangssignalen 19 beaufschlagt, die mittels Sensoren gemessene Betriebsgrößen der Brennkraftmaschine 1 darstellen. Das Steuergerät 18 erzeugt Ausgangssignale 20, mit denen über Aktoren bzw. Steller das Verhalten der Brennkraftmaschine 1 beeinflußt werden kann. Unter anderem ist das Steuergerät 18 dazu vorgesehen, die Betriebsgrößen der Brennkraftmaschine 1 zu steuern und/oder zu regeln. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

In einer ersten Betriebsart, einem sogenannten Homogenbetrieb der Brennkraftmaschine 1, wird die Drosselklappe 11 in Abhängigkeit von dem erwünschten Drehmoment teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig über die Drosselklappe 11 angesaugte Luft wird der eingespritzte Kraftstoff verwirbelt und damit in dem Brennraum 4 im wesentlichen gleichmäßig verteilt. Danach wird das Kraftstoff/Luft-Gemisch während der Verdichtungsphase verdichtet, um dann von der Zündkerze 10 entzündet zu werden. Durch die Ausdehnung des entzündeten Kraftstoffs wird der Kolben 2 angetrieben. Das entstehende Drehmoment hängt im Homogenbetrieb unter anderem von der Stellung der Drosselklappe 11 ab. Im Hinblick auf eine geringe Schadstoffentwicklung wird das Kraftstoff/Luft-Gemisch möglichst auf Lambda gleich Eins eingestellt.

In einer zweiten Betriebsart, einem sogenannten Schichtbetrieb der Brennkraftmaschine 1, wird die Drosselklappe 11 weit geöffnet. Der Kraftstoff wird von dem Einspritzventil 9 während einer durch den Kolben 2 hervorgerufenen Verdichtungsphase in den Brennraum 4 eingespritzt, und zwar örtlich in die unmittelbare Umgebung der Zündkerze 10 sowie zeitlich in geeignetem Abstand vor dem Zündzeitpunkt. Dann wird mit Hilfe der Zündkerze 10 der Kraftstoff entzündet, so daß der Kolben 2 in der nunmehr folgenden Arbeitsphase durch die Ausdehnung des entzündeten Kraftstoffs angetrieben wird. Das entstehende Drehmoment hängt im Schichtbetrieb weitgehend von der eingespritzten Kraftstoffmasse ab. Im wesentlichen ist der Schichtbetrieb für den Leerlaufbetrieb und den Teillastbetrieb der Brennkraftmaschine 1 vorgesehen.

Der Speicherkatalysator 12' des Katalysators 12 wird während des Schichtbetriebs mit Stickoxiden beladen. In einem nachfolgenden Homogenbetrieb wird der Speicherkatalysator 12' wieder entladen und die Stickoxide werden von dem Dreiwegekatalysator 12'' reduziert.

Der Speicherkatalysator 12' nimmt während seiner fortlaufenden Be- und Entladung mit Stickoxiden mit der Zeit Schwefel auf. Dies führt zu einer Einschränkung der Speicherfähigkeit des Speicherkatalysators 12', die nachfolgend als Alterung bezeichnet wird.

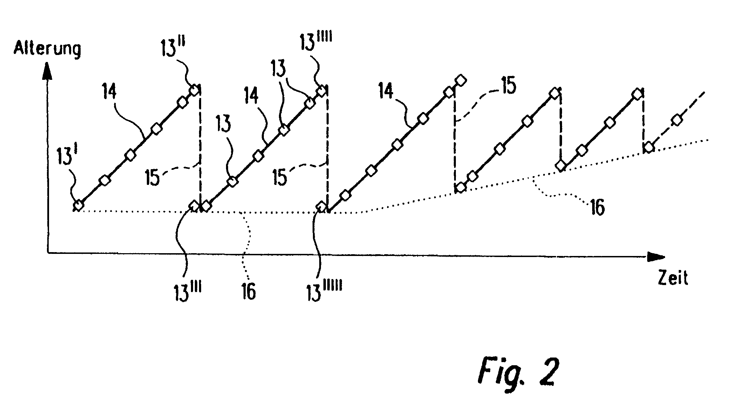

In der Figur 2 ist die Alterung des Speicherkatalysators 12' über der Zeit aufgetragen. Ein Wert für diese Alterung kann durch entsprechende Diagnoseverfahren von dem Steuergerät 18 ermittelt werden. Derartige Diagnoseverfahren können beispielsweise auf der Messung von NOx-Emissionen nach dem Speicherkatalysator 12' beruhen.

In der Figur 2 ist die Durchführung von derartigen Diagnoseverfahren und der daraus resultierende Wert einer Alterung jeweils durch einen Punkt 13 gekennzeichnet. Diese Alterungszustände der Punkte 13 sind durch eine durchgezogene Linie 14 miteinander verbunden. Die Linie 14 stellt damit einen Alterungsverlauf dar.

Ein erster Punkt 13' stellt die erstmalige Durchführung einer Diagnose des Speicherkatalysators 12' dar, mit der ein erster Alterungszustand ermittelt wird. In darauffolgenden Zeitpunkten werden weitere Diagnosen durchgeführt, aus denen sich weitere Alterungszustände ergeben. Diese weiteren Alterungszustände ergeben dabei aufgrund ihrer immer größer werdenden Werte einen Alterungsverlauf, der einer Alterung des Speicherkatalysators 12' entspricht. Wie bereits erwähnt wurde, wird durch die Alterung die Speicherfähigkeit des Speicherkatalysators 12' vermindert.

In einem Punkt 13'' wird dann ein Alterungszustand erreicht, aufgrund dessen von dem Steuergerät 18 eine Schwefelregenerierung des Speicherkatalysators 12' durchgeführt wird. Diese Schwefelregenerierung ist in der Figur 2 durch eine gestrichelte Linie 15 angedeutet und kann beispielsweise durch einen fetten Betriebszustand der Brennkraftmaschine 1 bei gleichzeitig hoher Abgastemperatur erreicht werden. Bei dieser Regenerierung wird der Schwefel aus dem Speicherkatalysator 12' ausgetragen. Dies führt zu einer weitgehenden Rückführung des Speicherkatalysators 12' in seinen anfänglichen Zustand, insbesondere zu seiner anfänglichen Speicherfähigkeit. Dies ist in der Figur 2 durch den Punkt 13''' dargestellt, der etwa dem anfänglichen Alterungszustand des Speicherkatalysators 12' entspricht.

Danach werden von dem Steuergerät 18 erneut die vorgenannten Diagnoseverfahren durchgeführt, die jeweils zu weiteren Punkten 13 und damit zu einer weiteren Linie 14 führen. In einem Punkt 13'''' wird von dem Steuergerät 18 entsprechend der Linie 15 erneut eine Regenerierung des Speicherkatalysators 12' durchgeführt, die wiederum zu einem Punkt 13''''' und damit etwa zu einer Erlangung der anfänglichen Speicherfähigkeit desselben führt.

Wie erläutert wurde, entsteht die bisher diskutierte Alterung aufgrund der Einlagerung von Schwefel in dem Speicherkatalysator 12'. Der Schwefel befindet sich dabei in dem der Brennkraftmaschine 1 zugeführten Kraftstoff bzw. dem daraus entstehenden Abgas. Diese Alterung ist reversibel und kann durch die beschriebene Regenerierung wieder weitgehend behoben werden.

Zusätzlich zu der vorstehenden reversiblen Alterung unterliegt der Speicherkatalysator 12' auch einer nicht-reversiblen Alterung. Diese entsteht aufgrund des andauernden Be- und Entladens des Speicherkatalysators 12' und stellt letztlich die wirkliche natürliche Alterung des Speicherkatalysators 12' dar.

In der Figur 2 ist die natürliche, nicht-reversible Alterung mit einer Linie 16 dargestellt. Diese Linie 16 ergibt sich aus den Punkten 13', 13''', 13''''' usw., also immer aus denjenigen Alterungszuständen, die der Speicherkatalysator 12' unmittelbar nach einer Schwefelregenerierung aufweist.

Wie der Figur 2 zu entnehmen ist, steigt die Linie 16 ab dem Punkt 13''''' langsam an. Die Steigung der Linie 16 ist dabei wesentlich geringer als die Steigung der Linien 14. Der Anstieg der Linie 16 ist gleichbedeutend mit einer bleibenden, immer geringer werdenden Speicherfähigkeit des Speicherkatalysators 12'. Dies zeigt sich auch darin, daß die Rückführung der Speicherfähigkeit des Speicherkatalysators 12' durch eine Schwefelregenerierung, also letztlich die Länge der Linien 15, immer geringer wird.

Wie erwähnt, ist der Verlust an Speicherfähigkeit des Speicherkatalysators 12', die sich aus der ansteigenden Linie 16 ergibt, nicht reversibel. Dies hat zur Folge, daß die Speicherfähigkeit langfristig gegen Null geht. Dann muß der Speicherkatalysator 12' ausgetauscht werden.

Wie erwähnt wurde, ist die Steigung der Linie 16 der natürlichen, nicht-reversiblen Alterung wesentlich geringer als die Steigung der Linien 14 der schwefelbedingten, reversiblen Alterung. Durch diese unterschiedlichen Steigungen kann das Steuergerät 18 die natürliche, nicht-reversible Alterung von der schwefelbedingten, reversiblen Alterung unterscheiden.

Wie ebenfalls erläutert wurde, bezieht sich die Steigung der Linien 14 auf die schwefelbedingte Alterung des Speicherkatalysators 12'. Diese Steigung stellt ein Maß für den Schwefelgehalt des Kraftstoffs dar, der zu der schwefelbedingten Alterung führt. Das Steuergerät 18 kann somit aus der Steigung der Linien 14 auf den Schwefelgehalt des verwendeten Kraftstoffs schließen.

Hierzu ermittelt das Steuergerät 18 den Kraftstoffverbrauch zwischen zwei aufeinanderfolgenden Regenerierungen des Speicherkatalysators 12'. Des weiteren ermittelt das Steuergerät 18 diejenige Schwefelmenge, die bei Verwendung eines bestimmten Kraftstoffs bei einer Regenerierung aus dem Speicherkatalysator 12' ausgetragen wird. Ein Maß dafür kann die Differenz zweier Punkte 13'' und 13''' sein. Aus diesen beiden Werten berechnet das Steuergerät 18 den Schwefelgehalt für den verwendeten bestimmten Kraftstoff. Bei den vorgenannten Werten kann gegebenenfalls eine einmalige Bestimmung ausreichen.

Danach ermittelt das Steuergerät 18, welche Steigung der Linien 14 sich bei dem vorstehend berechneten Schwefelgehalt ergibt. Damit ist ein Bezug zwischen der Steigung der Linien 14 und dem Schwefelgehalt des bestimmten Kraftstoffs hergestellt. Ändert sich in einem späteren Zeitpunkt der Schwefelgehalt z.B. aufgrund eines anderen verwendeten Kraftstoffs, so ändert sich auch die Steigung der Linien 14. Dies wird von dem Steuergerät 18 festgestellt. Aus der geänderten Steigung der Linien 14 kann dann das Steuergerät 18 auf den geänderten Schwefelgehalt rückschließen.

Das Steuergerät 18 ist damit in der Lage, aus der Steigung der Linien 14 den Schwefelgehalt des verwendeten Kraftstoffs zu ermitteln.

Mit der Kenntnis des Schwefelgehalts des verwendeten Kraftstoffs kann das Steuergerät 18 die Regenerierung des Speicherkatalysators 12' beeinflussen. So kann von dem Steuergerät 18 beispielsweise der Zeitpunkt der Regenerierung und/oder die Intensität der Regenerierung, insbesondere die Temperataur und die Menge des eingesetzten Regeneriermittels, in Abhängigkeit von dem Schwefelgehalt des verwendeten Kraftstoffs bestimmt werden.

Insbesondere kann das Steuergerät 18 die Einlagerung des Schwefels in dem Speicherkatalysator 12' im Betrieb der Brennkraftmaschine 1 nachbilden oder modellieren. Mit Hilfe des ermittelten Schwefelgehalts kann das Steuergerät 18 auf der Grundlage der sonstigen Betriebsgrößen der Brennkraftmaschine 1 in jedem Zeitpunkt diejenige Schwefelmenge errechnen, die bereits in den Speicherkatalysator 12' eingebracht worden ist. Daraus kann dann das Steuergerät 18 den Zeitpunkt und auch die Intensität der nächsten Regenerierung des Speicherkatalysators 12' ermitteln.

## Patentansprüche

1. Verfahren zum Betreiben eines Speicherkatalysators (12') einer Brennkraftmaschine (1) insbesondere eines Kraftfahrzeugs, bei dem der Speicherkatalysator (12') mit Stickoxiden be- und entladen wird, und bei dem die Speicherfähigkeit des Speicherkatalysators (12') aufgrund von in dem verwendeten Kraftstoff enthaltenem Schwefel vermindert wird, **dadurch gekennzeichnet, daß** mehrere Alterungszustände (Punkte 13) des Speicherkatalysators (12') ermittelt werden, und daß aus aufeinanderfolgenden Alterungszuständen (Punkte 13) ein Schwefelgehalt des verwendeten Kraftstoffs ermittelt wird.

2. Verfahren nach Anspruch 1, **dadurch gekennzeichnet, daß** eine Steigung der aufeinanderfolgenden Alterungszustände (Punkte 13) ermittelt wird, und daß der Schwefelgehalt in Abhängigkeit von dieser Steigung ermittelt wird.

3. Verfahren nach Anspruch 1, **dadurch gekennzeichnet, dass** ein Kraftstoffverbrauch zwischen zwei aufeinander folgenden Regenerierungen ermittelt wird, dass eine bei einer Regenerierung ausgetragene Schwefelmenge ermittelt wird, dass aus dem Kraftstoffverbrauch und der Schwefelmenge der Schwefelgehalt des Kraftstoffs ermittelt wird, dass eine Steigung der aufeinander folgenden Alterungszustände (Punkte 13) ermittelt wird, dass ein Bezug zwischen dem Schwefelgehalt und der Steigung hergestellt wird, und dass aus einer Änderung der Steigung auf eine entsprechende Änderung des Schwefelgehalts geschlossen wird.

4. Verfahren nach einem der Ansprüche 1 bis 3, **dadurch gekennzeichnet, daß** der Zeitpunkt einer Schwefelregenerierung in Abhängigkeit von dem Schwefelgehalt bestimmt wird.

5. Verfahren nach einem der Ansprüche 1 bis 4, **dadurch gekennzeichnet, daß** die Intensität einer Regenerierung in Abhängigkeit von dem Schwefelgehalt bestimmt wird.

6. Computer-Programm für ein Steuergerät (18) einer Brennkraftmaschine (1) insbesondere eines Kraftfahrzeugs, programmiert zur Anwendung des Verfahrens nach einem der Ansprüche 1 bis 5.

7. Computer-Programm nach Anspruch 6, **gekennzeichnet durch** seine Speicherung auf einem Speicherelement, insbesondere einem Flash-Memory.

8. Steuergerät (18) für eine Brennkraftmaschine (1) insbesondere eines Kraftfahrzeugs, hergerichtet zur Anwendung des Verfahrens nach einem der Ansprüche 1 bis 5.

9. Brennkraftmaschine (1) insbesondere für ein Kraftfahrzeug mit einem Steuergerät (18), das zur Anwendung des Verfahrens nach einem der Ansprüche 1 bis 5 hergerichtet ist.

## Claims

1. Method for operating a storage catalytic converter (12') of an internal combustion engine (1), in particular of a motor vehicle, in which the levels of nitrogen oxides in the storage catalytic converter (12') increase and are reduced again, and in which the storage capacity of the storage catalytic converter (12') is reduced due to sulphur contained in the fuel which is used, **characterized in that** a plurality of ageing states (points 13) of the storage catalytic converter (12') are determined, and **in that** a sulphur content of the fuel which is used is determined from successive ageing states (points 13).

2. Method according to Claim 1, **characterized in that** an inclination of the successive ageing states (points 13) is determined, and **in that** the sulphur content is determined as a function of this inclination.

3. Method according to Claim 1, **characterized in that** a consumption of fuel between two successive regenerations is determined, **in that** a quantity of sulphur discharged during a regeneration is determined, **in that** the sulphur content of the fuel is determined from the consumption of fuel and the quantity of sulphur, **in that** an inclination of the successive ageing states (points 13) is determined, **in that** a relationship between the sulphur content and the inclination is produced, and **in that** a conclusion is drawn from a change in the inclination as to a corresponding change in the sulphur content.

4. Method according to one of Claims 1 to 3, **characterized in that** the time of a sulphur regeneration is determined as a function of the sulphur content.

5. Method according to one of Claims 1 to 4, **characterized in that** the intensity of a regeneration is determined as a function of the sulphur content.

6. Computer program for a control unit (18) of an internal combustion engine (1), in particular of a motor vehicle, programmed for using the method according to one of Claims 1 to 5.

7. Computer program according to Claim 6, **characterized by** being stored on a memory element, in particular a flash memory.

8. Control unit (18) for an internal combustion engine (1), in particular of a motor vehicle, set up for using the method according to one of Claims 1 to 5.

9. Internal combustion engine (1), in particular for a motor vehicle, having a control unit (18) which is set up for using the method according to one of Claims 1 to 5.

## Revendications

1. Procédé pour utiliser un catalyseur à accumulation (12') d'un moteur à combustion interne (1), en particulier d'un moteur de véhicule automobile, dans lequel le catalyseur à accumulation (12') est chargé d'oxydes d'azote et en est déchargé, la capacité d'accumulation du catalyseur à accumulation (12') étant réduite par le soufre présent dans le carburant utilisé,
**caractérisé en ce qu'**
on détecte plusieurs états de vieillissement (points 13) du catalyseur à accumulation (12'), et une teneur en soufre du carburant utilisé est calculée sur la base d'états de vieillissement successifs.

2. Procédé selon la revendication 1,
**caractérisé en ce qu'**
une croissance des états de vieillissement successifs (points 13) est calculée et la teneur en soufre est calculée en fonction de cette croissance.

3. Procédé selon la revendication 1,
**caractérisé en ce qu'**
on détecte une consommation de carburant entre deux régénérations successives et une quantité de soufre extraite lors d'une régénération on calcule la teneur en soufre du carburant sur la base de la consommation de carburant et de la quantité de soufre, une croissance des états de vieillissement (points 13) successifs et une relation entre la teneur en soufre et la croissance, et une variation correspondante de la teneur en soufre est dérivée sur la base d'une variation de la croissance.

4. Procédé selon une des revendications 1 à 3,
**caractérisé en ce que**
l'instant d'une régénération du soufre est déterminé en fonction de la teneur en soufre.

5. Procédé selon une des revendications 1 à 4,
**caractérisé en ce que**
l'intensité d'une régénération est déterminée en fonction de la teneur en soufre.

6. Programme d'ordinateur pour un appareil de commande (18) d'un moteur à combustion interne (1), en particulier d'un moteur de véhicule automobile, programmé pour l'application du procédé selon une des revendications 1 à 5.

7. Programme d'ordinateur selon la revendication 6,
**caractérisé en ce qu'**
il est enregistré sur un élément de mémoire, en particulier sur une mémoire flash.

8. Appareil de commande (18) pour un moteur à combustion interne (1) en particulier pour un moteur de véhicule automobile, construit pour l'application du procédé selon une des revendications 1 à 5.

9. Moteur à combustion interne (1), en particulier pour un véhicule automobile, équipé d'un appareil de commande (18) qui est construit pour l'application du procédé selon une des revendications 1 à 5.
